# EUROPEAN PATENT APPLICATION

(11) **EP 3 381 795 A1**
(43) Date of publication of application: **03.10.2018**
(21) Application number: 18163372.8
(22) Date of filing: 22.03.2018
(51) Int. Cl.: B64C 13/00, B64C 9/00, B64D 45/00, B64C 9/16, B64C 9/22, B64C 13/24

(54) **AIRCRAFT SLAT AND FLAP CONTROL WITH RADIO FREQUENCY IDENTIFICATION TAGS**

(30) Priority: 31.03.2017 US 201715476669
(71) Applicant: Hamilton Sundstrand Corporation, Charlotte, NC 28217-4578 (US)
(72) Inventor: ANKNEY, Darrell E., Dixon, IL 61021 (US); CRANDALL, Adam, Winnebago, IL 61088 (US); PILGRIM, David L., Caledonia, IL 61011 (US)
(74) Representative: Dehns

(57) **Abstract**

Disclosed is a system for monitoring wing control on an aircraft (100) that includes a plurality of radio frequency identification device (RFID) tags (308, 310) attachable to a movable wing portion (308). The system includes a RFID reader (306) attachable to a stationary wing portion (304) and configured to communicate with at least two RFID tags, and a controller (402). The controller (402) includes a processor (403) connected to the RFID reader (306). The processor (403) transmits at least two carrier signals via the RFID reader (306) to the at least two RFID tags. Each of the transmitted carrier signals have a different carrier frequency. The processor (403) also receives at least two reflected signals from the at least two RFID tags. The processor (403) determines, based on the reflected signal from the at least two RFID tags, at least one of a motion of the movable wing portion (302) and a distance of the movable wing portion (302).

## Description

### BACKGROUND

Exemplary embodiments pertain to the art of aircraft wing control and more particularly to aircraft slat and flap control with radio frequency identification (RFID) tags.

Aircraft slat and flap systems require accurate measurements between the stationary portion of the wing and the movable slats and flaps portion of the wing to determine the position of the slats and flaps for aircraft control in flight. The slats and flaps are extended and retracted at variable positions depending on the aircraft's take-off or landing situation to provide high lift to the aircraft at lower aircraft speeds. For safety determinations and controls, the high lift slats and flaps are precisely measured to insure the correct amount of high lift. Current slat and flap measurement methods require wired and mechanical sensors and linkages between the stationary portion of the wing and the extending or retracting slats and flap panels.

### BRIEF DESCRIPTION

Disclosed is a system for monitoring a wing on an aircraft that includes a plurality of radio frequency identification device (RFID) tags attachable to a movable wing portion. The system includes a RFID reader attachable to a stationary wing portion and configured to communicate with at least two RFID tags, and a controller. The controller includes a processor operatively connected to the RFID reader. The processor transmits at least two carrier signals via the RFID reader to the at least two RFID tags. Each of the at least two transmitted carrier signals have a different carrier frequency. The processor also receives, via the RFID reader, at least two reflected signals from the at least two RFID tags. Each of the at least two reflected signals also have a different carrier frequency. The processor determines, based on the reflected signal from the at least two RFID tags, at least one of a motion of the movable wing portion and a distance of the movable wing portion relative to the stationary wing portion.

Disclosed is a method for monitoring a wing on an aircraft. The method includes transmitting, via a RFID reader, at least two carrier signals to the at least two RFID tags. Each of the at least two transmitted carrier signals have a different carrier frequency. The method includes receiving, via the RFID reader, at least two reflected signals from the at least two RFID tags. Each of the at least two reflected signals also have a different carrier frequency. The method further includes determining, via a processor, based on the reflected signal from the at least two RFID tags, at least one of a motion of a movable wing portion and a distance of the movable wing portion relative to the stationary wing portion.

Also disclosed is a computer program product for monitoring a wing on an aircraft. The computer program product includes a computer readable storage medium on which program instructions are stored. The program instructions executable by a processor to cause the processor to perform a method. The method includes transmitting, via a RFID reader, at least two carrier signals to the at least two RFID tags. Each of the at least two transmitted carrier signals have a different carrier frequency. The method includes receiving, via the RFID reader, at least two reflected signals from the at least two RFID tags. Each of the at least two reflected signals also have a different carrier frequency. The method further includes determining, via a processor, based on the reflected signal from the at least two RFID tags, at least one of a motion of a movable wing portion and a distance of the movable wing portion relative to the stationary wing portion.

### BRIEF DESCRIPTION OF THE DRAWINGS

The following descriptions should not be considered limiting in any way. With reference to the accompanying drawings, like elements are numbered alike:
FIG. 1 is a RFID slat and flap control system on an exemplary aircraft according to one embodiment;
FIG. 2 is a RFID reader for use in the RFID slat and flap control system of FIG. 1 according to one embodiment;
FIG. 3 depicts a movable wing portion and a stationary wing portion according to one embodiment;
FIG. 4 depicts an RFID slat and flap control system according to one embodiment;
FIG. 5 depicts an RFID tag in communication with two RFID readers according to one embodiment; and
FIG. 6 depicts a method for monitoring a wing on an aircraft using the RFID slat and flap control system of FIG. 4 according to one embodiment.

### DETAILED DESCRIPTION

A detailed description of one or more embodiments of the disclosed apparatus and method are presented herein by way of exemplification and not limitation with reference to the Figures.

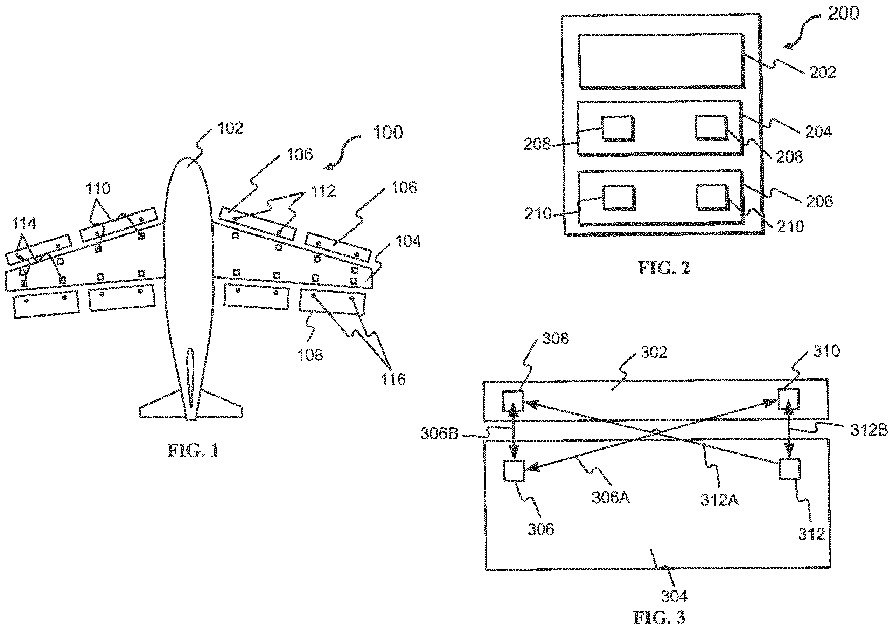

Embodiments of the present invention assist in the control of slat and flap motion by precisely measuring their position and movement with respect to the stationary portion of the wing. FIG. 1 depicts an aircraft 100 with a RFID slat and flap control system, according to one embodiment. In some aspects, the system includes a RFID reader 110 configured on a stationary (unmovable) portion of a wing 104 of aircraft 100, and at least two RFID tags 112 (hereafter "RFID tag 112") rigidly configured on one or more movable wing portions such as slat(s) 106 and/or flap panel(s) 108. In some aspects, RFID reader 110 outputs a predetermined carrier signal from the stationary portion of the wing 104 to one or more of the RFID tags 112. One or more RFID readers are configured to communicate with RFID tags on a single panel. For example, RFID reader 110 may be configured to communicate with RFID tags 112 on slat 106, and RFID readers 114 may be configured to communicate with the RFID tags 112 on the flap panel 108.

According to one embodiment, the RFID tag 112 receives and reflects the signal of the carrier to the RFID reader 110. The RFID reader 110 is configured for signal output at multiple frequencies, where each of the output frequencies are different from each other.

FIG. 2 depicts a RFID reader for use in the RFID slat and flap control system of FIG. 1, according to one embodiment. RFID reader 200 may be, for example, RFID readers 110 or 114 depicted in FIG. 1. Referring now to FIG. 2, RFID reader 200 includes a signal generator 202. RFID reader 200 also includes a signal transmitter 204, and a receiver 206.

Signal generator 202 is configured to generate the at least two carrier signals having the different carrier frequencies. Signal transmitter 204 includes one or more antenna 208 configured to transmit the carrier signals generated by signal generator 202. Each of the signals generated by have different carrier frequencies such that when the signal is transmitted to an RFID tag, the reflected signal is received having the different frequency.

Receiver 206 includes one or more receiver antennae 210 configured to receive the reflected signals from the RFID tag (e.g., RFID tag 112 in FIG. 1). Receiver 206 can receive reflections of the signals at multiple frequencies from the tags.

FIG. 3 depicts a movable wing portion 302 and a stationary wing portion 304 according to one embodiment. Referring now to FIG. 3, RFID reader 306 is attachable to a stationary wing portion 304 and configured to communicate with at least two RFID tags 308 and 310. Since the signals transmitted from RFID reader 306 to the respective RFID tags 308 and 310 are different from each other with respect to frequency, the system can accurately measure distance (e.g., within ±1 mm of accuracy) and motion (a change in distance with respect to time) between each of RFID tags (308 and 310, for example) and the RFID reader (306 for example) based on the amount of change in phase between the reflected signals received by the receiving section and the carrier signals and the frequencies of the carrier signals (*i.e*., triangulation). The distances can accurately determine a position for each of the movable wing portions 302.

In one embodiment, signal transmitter 204 and the receiver 206 each include two transmit and receive antennae (e.g., 208 and 210). One transmit antenna 208 is paired with one receiver antenna 210. The paired antennae send and obtain multiple receive signals reflected from RFID tags 308 and 310. The relative strengths of the reflected signals vary when receiver 206 receives the reflected signals. This creates a dual channel redundancy that provides additional reliability and precision to distance and motion measurements.

Accordingly, RFID reader 306 can receive at least two reflected signals 306A and 306B from RFID tags 308 and 310, where each of the at least two reflected signals have a different carrier frequency. Although only two RFID tags are shown on movable wing portion 302, it should be appreciated that there may be any number of RFID tags configured as an array on a single movable wing portion, and there may be multiple RFID readers configured to transmit a plurality of different carrier signals and receive their reflections from the multiple RFID tags on the panel. Similarly, RFID reader 312 can receive at least two reflected signals 312A and 312B from RFID tags 308 and 310, where each of the at least two reflected signals have a different carrier frequency.

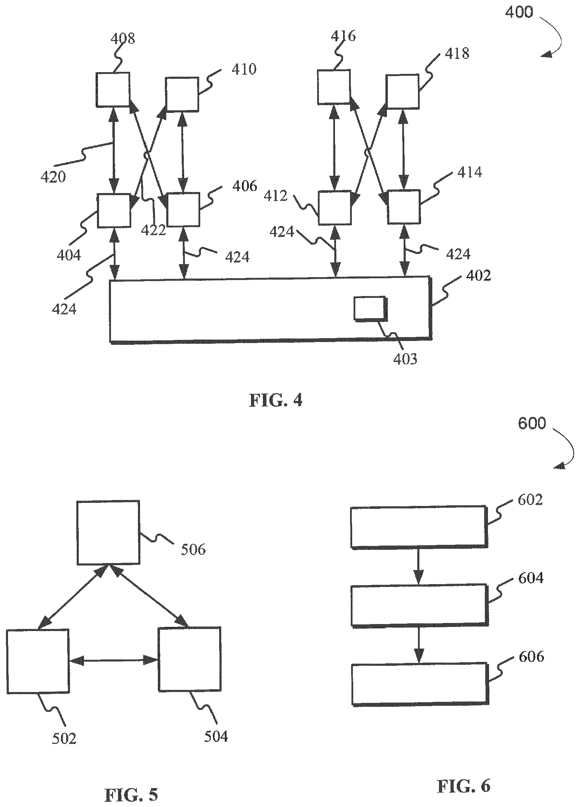

FIG. 4 depicts an RFID slat and flap control system 400, according to one embodiment. System 400 depicts an exemplary configuration having a plurality of RFID readers connecting a single controller 402. In some aspects, controller 402 may determine motion of one or more movable wing portions such as, for example, slat 106 and/or flap 108 as shown in FIG. 1.

Referring now to FIG. 4, system 400 includes a controller 402 having a processor 403. System 400 further includes RFID readers 404 and 406, 412, and 414, which are attachable to a stationary (non-movable) wing portion such as, for example, wing 104 shown in FIG. 1. RFID reader 404 is operatively connected (via electromagnetic field) to RFID tags 408 and 410. RFID reader 406 is operatively connected (via electromagnetic field) to RFID tags 408 and 410. RFID reader 412 is operatively connected (via electromagnetic field) to RFID tags 416 and 418. RFID reader 414 is operatively connected (via electromagnetic field) to RFID tags 416 and 418. RFID readers 404, 406, 412, and 414 are operatively connected to controller 402 via communication busses 424.

According to one embodiment, controller 402 may connect a plurality of RFID readers across the entire aircraft. For example, controller 402 may operatively connect to RFID readers installed on all flaps and slats of the aircraft. Accordingly, controller 402 may cause processor 403 to transmit, via the at least two transmit antennae 208 as shown in FIG. 2, the at least two reflected signals 420 and 422. By using the two antennae/receiver pairs simultaneously for each respective reader channel, processor 403 may determine the motion or distance of movable wing portion redundantly via the dual channels. The redundancy provides increased accuracy and reliability due to signal interferences. In some aspects, processor 403 may receive, via the at least two receiver antennae, the at least two reflected signals at each receiver antenna. Processor 403 can then determine the motion of the movable wing portion and the distance of the movable wing portion with dual channel redundancy.

FIG. 5 depicts an RFID tag 506 in communication with two RFID readers 502 and 504, according to one embodiment. Referring now to FIG. 5. In some aspects, processor 403 may determine a precise distance or movement of a movable wing portion by triangulation using multiple readers in communication with a single RFID tag. For example, processor 403 may cause RFID reader 502 to transmit a carrier signal to RFID tag 506, and cause RFID reader 504 to transmit a second carrier signal to RFID tag 506. The signals sent by each respective RFID reader have different frequencies (operating across independent reader channels). When RFID tag 506 reflects the signals back to each respective reader, a precise distance can be determined by receiving both signals at each respective reader independently.

Each RFID reader may identify a phase in a first signal of the at least two reflected signals, identify a phase in a second signal of the at least two reflected signals, and determine a change in phase between the first signal and the second signal based on the time taken for the signals to reflect back to the readers. Accordingly, processor 403 may determine the motion of the movable wing portion based on the change in phase.

FIG. 6 depicts a method for monitoring a wing on an aircraft using the RFID slat and flap control system of FIG. 4 according to one embodiment. Referring now to FIG. 6, at step 602 processor 403 can cause RFID reader 404 (for example) to transmit at least two carrier signals via the RFID reader to the at least two RFID tags 408 and 410. Each of the at least two transmitted carrier signals have a different carrier frequency with respect to each other and any other carrier frequencies used in system 400.

As shown in step 604, processor 403 can receive, via RFID reader 404, at least two reflected signals 420 and 422 from the at least two RFID tags 408 and 410. Each of the at least two reflected signals 420 and 422 have a different carrier frequency.

As shown in step 606, processor 403 may determine, based on the reflected signals 420 and 422 from the at least two RFID tags 408 and 410, at least one of a motion of the movable wing portion and a distance of the movable wing portion to which RFID tags 408 and 410 are stationary.

Although described with respect to RFID reader 404, steps 602 through 406 can apply to RFID readers 412 and 414 and the corresponding RFID tags 416 and 418 associated therewith.

The present invention may reduce the complexity of kinetic strategies to detect and measure motion and distance. In other aspects, embodiments of the present invention reduce aircraft weight by eliminating mechanical linkages and wiring harnesses for movable slats and flap portions of the wing. Some aspects may measure and detect left to right wing asymmetry, panel to panel skew, and panel to panel disconnect and intra-panel skew, and increase accuracy of measurement of the panel skews to ±1 mm.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

The present invention can be a system, a method, and/or a computer program product at any possible technical detail level of integration. The computer program product can include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, and any suitable combination of the foregoing. A computer readable storage medium, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions can be provided to a processor or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a controller, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions can also be loaded onto a computer memory included with the controller, other programmable data processing apparatus, or other device to cause a series of operational steps to be performed on the controller, other programmable apparatus or other device to produce a computer implemented process, such that the instructions which execute on the computer, other programmable apparatus, or other device implement the functions/acts specified in the flowchart and/or block diagram block or blocks.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for wing monitoring on an aircraft (100) comprising:
at least two radio frequency identification device (RFID) tags (308, 310) attachable to a movable wing portion (302);
a RFID reader (306) attachable to a stationary wing portion (304) and configured to communicate with at least two RFID tags (308, 310);
a controller (402) comprising a processor (403) operatively connected to the RFID reader (306), the processor configured to:
transmit at least two carrier signals via the RFID reader (306) to the at least two RFID tags (308, 310), wherein each of the at least two transmitted carrier signals comprise a different carrier frequency;
receive, via the RFID reader (306), at least two reflected signals from the at least two RFID tags (308, 310), wherein each of the at least two reflected signals comprise a different carrier frequency; and
determine, via the processor (403), based on the reflected signal from the at least two RFID tags (308, 310), at least one of a motion of the movable wing portion (302) and a distance of the movable wing portion (302) relative to the stationary wing portion (304).

2. The system of claim 1, wherein the processor (403) is configured to:
identify a phase in a first signal of the at least two reflected signals;
identify a phase in a second signal of the at least two reflected signals;
determine a change in phase between the first signal and the second signal; and
determine the motion of the movable wing portion (302) based on the change in phase.

3. The system of claim 1 or 2, wherein the RFID reader comprises:
a signal generator (202) configured to generate the at least two carrier signals having the different carrier frequencies;
a signal transmitter (204) configured to transmit the at least two carrier signals having the different carrier frequencies; and
a receiver (206) configured to receive the at least two reflected signals.

4. The system of claim 3, wherein the signal transmitter (204) comprises at least two transmit antennae, and the receiver (206) comprises at least two receiver antennae;
wherein the transmitter (204) is further configured to:
transmit, via the at least two transmit antennae, the at least two carrier signals redundantly via dual channels; and
receive, via the at least two receiver antennae, the at least two reflected signals at each antennae;
wherein the processor (403) determines the at least one of the motion of the movable wing portion and the distance of the movable wing portion (302) with dual channel redundancy.

5. The system of any of claims 1 to 4 wherein the movable wing portion (302) is a slat.

6. The system of any of claims 1 to 4 wherein the movable wing portion (302) is a flap.

7. The system of any preceding claim, wherein the processor (403) is configured to:
transmit a plurality of carrier signals via the RFID reader to a plurality of RFID tags (308, 310), wherein each of the plurality of transmitted carrier signals comprise a different carrier frequency, wherein the plurality of RFID tags (308, 310) are configured on two or more movable wing portions (302);
receive, via the RFID reader (306), a plurality of reflected signals from the plurality of RFID tags (308, 310), wherein each of the plurality of reflected signals comprise a different carrier frequency.

8. The system of claim 7, wherein the processor (403) is further configured to determine a skew of the two or more movable wing portions (302) based on the reflected signal from the at least two RFID tags (308, 310).

9. The system of any preceding claim, wherein the processor (403) is configured to determine a symmetry between a plurality of movable wing portions (302) on a single wing based on the reflected signal from the at least two RFID tags (308, 310).

10. A method of monitoring a wing on an aircraft (100) comprising:
transmitting, via a RFID reader (306), at least two carrier signals to the at least two RFID tags (308, 310), wherein each of the at least two transmitted carrier signals comprise a different carrier frequency;
receiving, via the RFID reader (306), at least two reflected signals from the at least two RFID tags (308, 310), wherein each of the at least two reflected signals comprise a different carrier frequency; and
determining, via a processor (403), based on the reflected signal from the at least two RFID tags, at least one of a motion of a movable wing portion (302) and a distance of the movable wing portion (302) relative to the stationary wing portion (304).

11. The method of claim 10, further comprising:
identifying, via the processor (403), a phase in a first signal of the at least two reflected signals;
identifying, via the processor (403), a phase in a second signal of the at least two reflected signals;
determining, via the processor (403), a change in phase between the first signal and the second signal; and
determining, via the processor (403), the motion of the movable wing portion (302) based on the change in phase.

12. The method of claim 10 or 11, further comprising:
generating, via a signal generator (202), the at least two carrier signals having the different carrier frequencies;
transmitting, via a signal transmitter (204), the at least two carrier signals having the different carrier frequencies; and
receiving the at least two reflected signals via a receiver (206).

13. The method of claim 12, further comprising:
transmitting, via at least two transmit antennae, the at least two carrier signals redundantly via dual channels;
receiving, via at least two receiver antennae, the at least two reflected signals at each antennae; and
determining, via the processor (403), the at least one of the motion of the movable wing portion (302) and the distance of the movable wing portion (302) with dual channel redundancy.

14. The method of any of claims 10 to 13 wherein the movable wing portion (302) is a slat.

15. The method of any of claims 10 to 13 wherein the movable wing portion (302) is a flap.
